# EUROPÄISCHE PATENTSCHRIFT

(11) **EP 4 136 398 B1**
(45) Veröffentlichungstag und Bekanntmachung des Hinweises auf die Patenterteilung: **03.07.2024**
(21) Anmeldenummer: 21719575.9
(22) Anmeldetag: 14.04.2021
(51) Int. Cl.: F28F 3/08, F28F 9/02, C02F 1/04, F28F 27/00

(54) **MANIPULATIONSSICHERER WÄRMETAUSCHER FÜR DESTILLATIONSANLAGEN**
SAFE-TO-HANDLE HEAT EXCHANGER FOR DISTILLATION PLANTS
ÉCHANGEUR DE CHALEUR SANS DANGER POUR USINES DE DISTILLATION

(30) Priorität: 16.04.2020 DE 102020204836
(43) Veröffentlichungstag der Anmeldung: 22.02.2023
(73) Patentinhaber: Robert Bosch GmbH, 70442 Stuttgart (DE)
(72) Erfinder: BAUER, Harald, 71139 Ehningen (DE)
(86) Internationale Anmeldenummer: PCT/EP2021/059629
(87) Internationale Veröffentlichungsnummer: WO 2021/209487

(56) Entgegenhaltungen:
- US-A1- 2011 220 334
- US-B2- 6 899 163
- US-B2- 10 228 196

## Beschreibung

Die Erfindung betrifft einen Wärmetauscher, insbesondere für den Einsatz in einer Destillationsanlage, aufweisend einen Einbaurahmen und eine als ein Stapel aus mehreren Blechen ausgestaltete Basiseinheit, wobei die Bleche der Basiseinheit zum Ausbilden von Fluidkanälen eine Prägung aufweisen, wobei mindestens ein Fluidkanal zum Führen eines Fluids zwischen mindestens zwei Blechen ausgebildet ist. Des Weiteren betrifft die Erfindung eine Anlage und ein Verfahren. Ein Wärmetauscher nach dem Oberbegriff des Anspruchs 1 ist aus US,6 899,163B2 bekannt.

### Stand der Technik

Bei der Herstellung von Destillationsanlagen stellt der Wärmetauscher eine der teuersten Komponenten dar, da der Wärmetauscher präzise auf den Prozess der jeweiligen Destillationsanlage, wie beispielsweise der Frischwassergewinnung, abgestimmt wird. Der Wärmetauscher kann dabei als ein kombinierter Verdampfer und Kondensator ausgestaltet sein.

Wird der Wärmetauscher überdimensioniert, steigt bei zu geringer Last die Verkalkungsgefahr bzw. die sogenannte Foulinggefahr. Bei einem unterdimensionierten Wärmetauscher besteht die Gefahr, dass die jeweiligen Betreiber der Destillationsanlage Modifikationen und Umgehungslösungen zum Erhöhen des Frischwasser-Ertrags vornehmen.

Es sind bereits Destillationsanlagen bekannt, welche einen zerlegbaren Wärmetauscher aufweisen. Dabei können die jeweiligen Bleche bzw. Platten des Wärmetauschers bzw. der Basiseinheit des Wärmetauschers ausgebaut und gereinigt werden. Hierdurch kann ein verkalkter überdimensionierter Wärmetauscher einfach gereinigt werden. Problematisch an dieser Lösung ist jedoch der Stillstand der Destillationsanlage während der Reinigung.

US 6,899,163 B2 beschreibt einen Wärmetauscher mit einer Vielzahl von ersten und zweiten Platten. Die Platten werden zu einer Einheit zusammengesetzt, die in einem Konterabschnitt eines Einbaurahmens angeordnet ist. Es wird eine Herstellungsvorrichtung beschrieben, um Wärmetauscher herzustellen. Die Herstellungsvorrichtung ist mit einer Steuereinheit und Sensoren ausgestaltet, um die Abstände zwischen den Platten einzustellen. Dabei fungiert die Herstellungsvorrichtung als eine Presse, die eine Antriebseinheit aufweist.

### Offenbarung der Erfindung

Die der Erfindung zugrunde liegende Aufgabe kann darin gesehen werden, einen manipulationssicheren Wärmetauscher für eine Anlage vorzuschlagen, welcher eine maximale Betriebszeit der Anlage ermöglicht.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Wärmetauscher, insbesondere für den Einsatz in einer Destillationsanlage, bereitgestellt. Der Wärmetauscher weist einen Einbaurahmen und eine als ein Stapel aus mehreren Blechen ausgestaltete Basiseinheit auf. Die Bleche der Basiseinheit weisen zum Ausbilden von Fluidkanälen eine Prägung auf. Es ist mindestens ein Fluidkanal zum Führen eines Fluids zwischen mindestens zwei Blechen ausgebildet. Dabei können beispielsweise die Prägungen eines ersten Blechs Vertiefungen und Führungsrinnen ausbilden, welche einseitig durch ein zweites Blech begrenzt sind.

Die Basiseinheit ist vorteilhafterweise austauschbar zwischen einem Anschlussabschnitt und einem Konterabschnitt des Einbaurahmens angeordnet, wobei die Fluidkanäle der Basiseinheit und Anschlüsse der Anschlusseinheit und/oder Verbindungen zwischen der Anschlusseinheit und der Basiseinheit mechanisch durch eine individuelle Formgebung und/oder elektronisch durch eine elektronische Sicherung in Form eines RFID-Transponders (23) oder in Form eines Sensors kodiert sind.

Die Basiseinheit bzw. Prozesseinheit kann als eine kombinierte Verdampfer/Kondensator-Einheit oder als ein Verdampfer oder als ein Kondensator ausgebildet sein. Beispielsweise kann die Basiseinheit als ein Fallstromverdampfer oder als ein Vakuumverdampfer ausgestaltet sein.

Die in einer Anlage verfahrenstechnisch kritische Basiseinheit wird entgegen dem Stand der Technik nicht überdimensioniert, und somit nicht mit Reserve dimensioniert, wodurch weniger Verkalkung und Fouling auftritt. Trotzdem besteht die Möglichkeit die Ausbringung der Anlage, wie beispielsweise einer Destillationsanlage, durch einen größeren Austausch-Wärmetauscher nachträglich zu vergrößern, wenn die Anlage beispielsweise durch geringes Fouling oder regelmäßige Wartung optimal betrieben wird. Hierzu können der Wärmetauscher und insbesondere die Basiseinheit als ein Plug- und Play Tauschteil ausgestaltet sein. Bei einer Wartung der Anlage kann der gesamte Wärmetauscher oder nur die Basiseinheit ausgebaut und durch ein Ersatzteil ersetzt werden. Durch diese Maßnahme kann die Betriebsdauer maximiert werden, da der Austausch der Basiseinheit einen geringen Zeitaufwand beansprucht. Die Schritte der Inspektion und der Reinigung der ausgebauten Basiseinheit können unabhängig von dem Betrieb der Anlage ausgeführt werden.

Bevorzugterweise können der Wärmetauscher und/oder die Basiseinheit als ein "Unikat" ausgebildet sein, welches nur in die hierfür vorgesehene Anlage für einen sicheren und energiesparenden Betrieb passt. Dies kann durch eine mechanische Kodierung realisiert werden, welche eine Manipulation des Wärmetauschers verhindert.

Dabei können die Geometrie innerhalb der Basiseinheit und die Art der Basiseinheit beliebig sein. Beispielsweise kann die Basiseinheit als ein Vakuumverdampfer bei geringer Temperatur und hoher Zuverlässigkeit betreibbar sein. Die Anschlussbereiche zwischen der Basiseinheit und dem Wärmetauscher und/oder zwischen dem Wärmetauscher und der Anlage können durch die mechanische Kodierung zusätzlich "verwechslungssicher" und individuell für die jeweilige Anlage geformt sein.

Eine elektronische Kodierung des Wärmetauschers und/oder der Basiseinheit kann vorzugsweise durch eine elektronische Sicherung in Form eines RFID-Transponders oder in Form eines Sensors realisiert werden, welcher als ein Drucksensor, induktiver Sensor, kapazitiver Sensor oder als ein Magnetfeldsensor ausgestaltet sein kann. Durch die elektronische Kodierung kann eine Leseeinheit bzw. ein Lesegerät den Wärmetauscher oder die Basiseinheit anhand eines Transponders identifizieren und somit den Betrieb der Anlage mit einer korrekten Basiseinheit ermöglichen. Dabei kann bei einer manipulierten Basiseinheit oder einem manipulierten Wärmetauscher der Betrieb der Anlage unterbunden oder eine Fehlermeldung ausgegeben werden. Der Transponder kann vorzugsweise in die Basiseinheit oder den Rahmen des Wärmetauschers integriert sein.

Es kann somit sichergestellt werden, dass nur die originalen bzw. für die Anlage vorgesehenen Wärmetauscher in die entsprechende Anlage einbaubar ist. Die Zugänglichkeit und die Austauschbarkeit der Basiseinheit können bei der Auslegung der Anlage priorisiert und vereinfacht werden. Insbesondere kann bei der Wartung der Anlage ein Ersatz-Wärmetauscher oder eine Ersatz-Basiseinheit durch einen Service-Mitarbeiter bereitgestellt werden.

Die Basiseinheit kann in dem Einbaurahmen, welcher aus einem Anschlussabschnitt und einem Konterabschnitt besteht, eingespannt werden. Dies kann beispielsweise durch Befestigungsmittel in Form von Schraubverbindungen oder Spannhebel umgesetzt werden.

Gemäß einem Ausführungsbeispiel sind die Anschlüsse der Anschlusseinheit und/oder die Verbindungen zwischen der Anschlusseinheit und der Basiseinheit durch eine Form, eine Position, Verteilung der Anschlüsse, Querschnitt und/oder eine Querschnittsform der Anschlüsse mechanisch kodiert. Hierdurch können die Verbindungsabschnitte zwischen der Basiseinheit und dem Wärmetauscher und/oder zwischen dem Wärmetauscher und der Anlage manipulationssicher ausgeführt sein. Die mechanisch kodierten Anschlüsse können beispielsweise zum Zuführen von Heizdampf, zum Zuführen von Salzwasser, zum Abführen von Trinkwasserdampf, zum Abführen vom Salzwasserkonzentrat und dergleichen dienen.

Nach einer weiteren Ausführungsform erstrecken sich die mit den Fluidkanälen fluidleitend verbindbaren Anschlüsse der Anschlusseinheit senkrecht von der Anschlusseinheit. Durch diese Maßnahme kann eine vereinfachte Plug- und Play Montage des Wärmetauschers in der Anlage ermöglicht werden.

Gemäß einem weiteren Ausführungsbeispiel ist die Basiseinheit als ein Stapel aus miteinander verschweißten, gesinterten, zusammengesteckten, gekrimpten, gedruckten, verlöteten oder verklebten Blechen ausgestaltet, wobei die Basiseinheit als ein Spritzgussteil oder als ein Rapid-Prototype-Element ausgebildet ist. Basierend auf der Vielzahl von möglichen Herstellungsverfahren kann eine kosteneffizient ausgestaltete integrale bzw. einteilige Basiseinheit bereitgestellt werden, welche zwischen den Blechen keine Dichtungen benötigt. Durch den vereinfachten Austausch der Basiseinheit und die Austausch-Basiseinheit kann eine vereinfachte Reinigung der ausgebauten Basiseinheit außerhalb der Anlage durchgeführt werden.

Nach einer weiteren Ausführungsform ist die Basiseinheit aus einem Metall, einer Metalllegierung oder einem thermisch leitfähigen Kunststoff hergestellt. Hierdurch kann die Basiseinheit industriell und kosteneffizient produziert werden. Beispielsweise kann die Basiseinheit als geschweißte Einheit aus Titan, Stahl oder PVDF hergestellt sein. Des Weiteren kann die Basiseinheit ganz oder teilweise aus einem Polymer oder durch eine, beispielsweise an den Temperaturbereich oder an den Konzentrationsbereich des mindestens einen Fluids angepasste Kombination von Polymeren, wie beispielsweise PVDF, PE, PVC, PVCC, PP oder PFA hergestellt sein.

Gemäß einem weiteren Ausführungsbeispiel ist eine Basiseinheit mit unterschiedlich einstellbarer Anzahl von Blechen in den Einbaurahmen einsetzbar. Anhand der Anzahl der verwendeten Bleche kann der mögliche Trinkwasserumsatz der Anlage, welche die Basiseinheit verwendet, eingestellt werden. Mit zunehmender Anzahl der Bleche kann der Trinkwasserumsatz erhöht werden.

Wird beispielsweise eine Destillationsanlage aufgebaut, so unterscheiden sich die Einkaufspreise von verschiedenen Bauteilen, wie Pumpen, Ventilen und dergleichen, im Rahmen einer gewissen Baugrößenänderung nur unwesentlich. Hierdurch lohnt die Bereitstellung mehrerer Anlagen-Modelle mit einem Unterschied an Ausbringung von beispielsweise 20% nicht. Daher werden üblicherweise Anlagen für eine bestimmte Anlagenbetriebsweise optimiert.

Der verfahrenstechnisch kritische Wärmetauscher wird nicht überdimensioniert, jedoch besteht die Möglichkeit die Ausbringung durch den Einbau eines Wärmetauschers mit einer größeren Basiseinheit zu vergrößern.

Nach einem weiteren Aspekt der Erfindung wird eine Anlage zur thermischen Behandlung von mindestens einem Fluid bereitgestellt. Die Anlage weist mindestens einen Wärmetauscher auf, wobei der Wärmetauscher durch mindestens einen Ersatz-Wärmetauscher austauschbar ist.

Der Wärmetauscher kann hierbei mechanisch kodiert ausgestaltet sein und nur in diese Anlage mechanisch passen. Somit kann ein veränderter oder manipulierter Wärmetauscher nicht mehr in die Anlage eingebaut werden. Dies kann beispielsweise durch eine mechanische Kodierung der Anschlüsse des Wärmetauschers umgesetzt werden.

Die Anlage kann beispielsweise zur Wasseraufbereitung zur lokalen Trinkwasserherstellung mit einem Franchise-Konzept geeignet sein. Die Anlage kann eine technische Auslegung von Komponenten aufweisen, die einen Leistungszuwachs um beispielsweise 50% erlauben, da bei kleinerer Dimensionierung der Ventile Rohrleitungen und dergleichen bedingt durch die Sprünge der Normabmessungen kein Kostenvorteil entsteht.

Durch die vereinfachte Möglichkeit den Wärmetauscher zu ersetzen, kann die Anlage durch einen Ersatz-Wärmetauscher auf einen höheren Trinkwasserumsatz umgestellt werden. Des Weiteren kann die Betriebszeit der Anlage maximiert werden, da der eingebaute Wärmetauscher bei Bedarf lediglich durch einen Ersatz-Wärmetauscher ausgetauscht wird. Der Stillstand der Anlage beschränkt sich lediglich auf den Wärmetauscher-Austausch.

Soll die Ausbringung der Anlage vergrößert werden, beispielsweise bei einer steigenden Kundenzahl und daraus resultierendem Wasserbedarf, kann ein Anlagenbetreiber die Anlage durch den Einbau einer größeren Basiseinheit und/oder Wärmetauschers aufrüsten. Hierdurch kann beispielsweise ein um 25% oder um 50% vergrößerter Wärmetauscher eingesetzt werden. Eine Unterdimensionierung des Wärmetauschers kann somit vermieden werden.

Gemäß einem Ausführungsbeispiel ist der Wärmetauscher mechanisch über eine Form, Anzahl, Position und/oder Größe von Anschlüssen kodiert in der Anlage angeschlossen. Hierdurch kann eine verwechselungssichere Montage des Wärmetauschers in der Anlage sichergestellt werden. Des Weiteren kann durch eine derartige mechanische Kodierung der Anschlüsse das Risiko einer Manipulation des Wärmetauschers gesenkt werden.

Nach einer weiteren Ausführungsform weist die Anlage mindestens ein Sichtfenster, insbesondere zum Prüfen eines Originalzustands des Wärmetauschers und/oder einer Basiseinheit des Wärmetauschers, auf. Bevorzugterweise ist der Wärmetauscher und/oder die Basiseinheit des Wärmetauschers hinter dem Sichtfenster in der Anlage montiert. Durch diese Maßnahme kann der Wärmetauscher einfach und schnell inspiziert werden. Insbesondere ist hierdurch eine Manipulation der Anlage direkt sichtbar.

Gemäß einem weiteren Aspekt der Erfindung wird ein Verfahren zum Warten einer Anlage bereitgestellt. In einem Schritt wird ein Betrieb der Anlage eingestellt oder zumindest pausiert. Anschließend wird mindestens ein erster Wärmetauscher aus der Anlage ausgebaut und durch mindestens einen zweiten Wärmetauscher ersetzt. In einem weiteren Schritt wird der Betrieb der Anlage mit dem zweiten Wärmetauscher fortgesetzt.

Der ausgebaute erste Wärmetauscher kann anschließend gereinigt werden. Dies kann durch ein Einlegen des ersten Wärmetauschers in Essigsäure und ein anschließendes Spülen erfolgen.

Der Reinigungsvorgang des ersten Wärmetauschers verhindert jedoch nicht den Betrieb der Anlage. Entsprechend kann der zweite Wärmetauscher bei einem Reinigungsbedarf durch einen dritten Wärmetauscher oder durch den gereinigten ersten Wärmetauscher ersetzt werden.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer Anlage gemäß einer Ausführungsform,
- Fig. 2-4: schematische Darstellungen eines Wärmetauschers gemäß einer Ausführungsform,
- Fig. 5-7: schematische Darstellungen eines Wärmetauschers gemäß einer weiteren Ausführungsform und
- Fig. 8: ein schematisches Ablaufdiagramm zum Veranschaulichen eines Verfahrens zum Warten einer Anlage gemäß einer Ausführungsform.

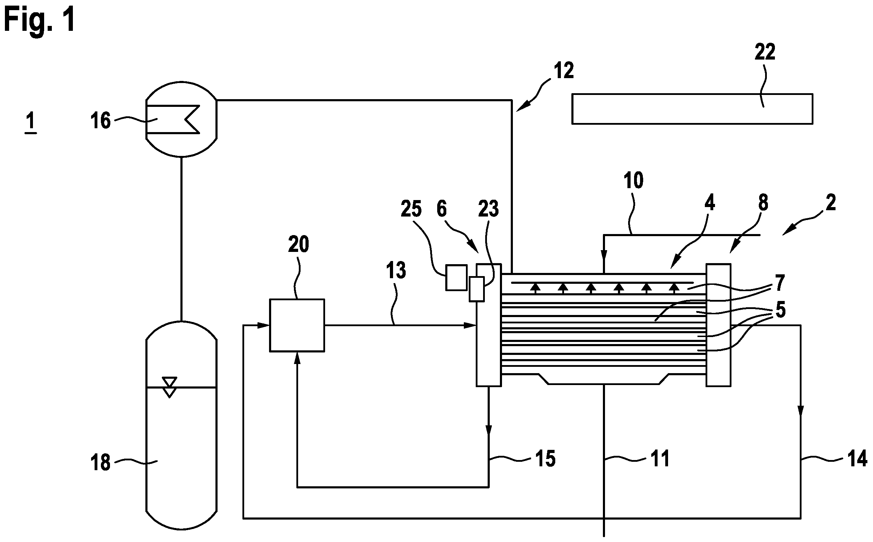

Die Figur 1 zeigt eine schematische Darstellung einer Anlage 1 gemäß einer Ausführungsform. Die Anlage 1 ist beispielhaft als eine Trinkwasseraufbereitungsanlage bzw. Destillationsanlage ausgestaltet, welche Trinkwasser aus Salzwasser durch Destillieren gewinnt. Die Anlage 1 weist einen Wärmetauscher 2 auf.

Der Wärmetauscher 2 weist eine Basiseinheit 4 auf. Die Basiseinheit 4 ist in einem Einbaurahmen 6, 8 eingesetzt und besteht aus einer Vielzahl von Blechen 5. Durch die Bleche 5 werden Fluidkanäle 7 ausgebildet. Insbesondere können zwischen jeweils zwei Blechen 5 ein oder mehrere Fluidkanäle 7 vorgesehen sein. Die Fluidkanäle 7 dienen zum Führen von Fluiden, wie beispielsweise Dampf oder Wasser.

Die Basiseinheit 4 ist austauschbar in dem Einbaurahmen 6, 8 angeordnet. Beispielsweise kann die Basiseinheit 4 in dem Einbaurahmen 6, 8 verschraubt oder durch Spannhaken eingespannt sein.

Der Einbaurahmen 6, 8 weist einen Anschlussabschnitt 6 und einen Konterabschnitt 8 auf, zwischen welchen die Basiseinheit 4 angeordnet ist. Die Fluidkanäle 7 der Basiseinheit 4 sind im dargestellten Ausführungsbeispiel fluidführend mit Anschlüssen 10, 11, 12, 13, 14, 15 des Anschlussabschnitts 6 verbunden.

Die Anschlüsse 10, 11, 12, 13, 14, 15 des Anschlussabschnitts 6 sind beispielsweise als ein Anschluss 10 für Salzwasserzufuhr, ein Anschluss 11 für den Abfluss der Salzlake, ein Anschluss 12 zum Abführen des Trinkwasserdampfs, ein Anschluss 13 zur Heizdampfzufuhr, ein Anschluss 14 für einen Heizdampfrücklauf und ein Anschluss 15 für einen Kondensatrücklauf des Heizdampfs ausgestaltet.

Es kann beispielsweise ein Fluidkanal 7 zum Führen von Heizdampf verwendet werden. Ein benachbarter Fluidkanal 7 kann Salzwasser aus der Salzwasserzufuhr 10 führen und somit auf Siedetemperatur erhitzen. Der resultierende Trinkwasserdampf kann durch den Anschluss 12 für den Trinkwasserdampf entweichen und in einem Kondensator 16 verflüssigt werden. Das verflüssigte Trinkwasser kann anschließend in einem Sammelbehälter 18 aufgefangen werden.

Der Heizdampf kann mit Hilfe eines Dampfgenerators 20 erzeugt und über den Anschluss 13 für Heizdampf in den Wärmetauscher 2 gelangen. Der aus dem Wärmetauscher 2 ausgetretene Heizdampf und das Kondensat des Heizdampfs können über die entsprechenden Anschlüsse 14, 15 erneut dem Dampfgenerator 20 zugeführt werden.

Der Wärmetauscher 2 ist hinter einem Sichtfenster 22 in der Anlage 1 montiert, sodass eine Sichtprüfung hinsichtlich eines original verbauten bzw. für die Anlage 1 vorgesehenen Wärmetauschers 2 möglich ist.

Zum Bereitstellen einer elektronischen Kodierung können der Wärmetauscher 2 und/oder die Basiseinheit 4 vorzugsweise durch eine elektronische Sicherung in Form eines RFID-Transponders oder in Form eines Sensors realisiert werden. Im dargestellten Ausführungsbeispiel ist an dem Wärmetauscher 2 ein Transponder 23 und anlagenseitig ein Lesegerät 25 positioniert. Die elektronische Kodierung kann basierend auf der RFID-Technologie, kapazitiver Sensorik, Magnetfeldsensorik oder basierend auf einer induktiver Sensorik ausgestaltet sein. Erkennt das Lesegerät 25 einen korrekten Transponder, kann der Betrieb der Anlage 1 mit dem verbauten Wärmetauscher 2 freigegeben werden.

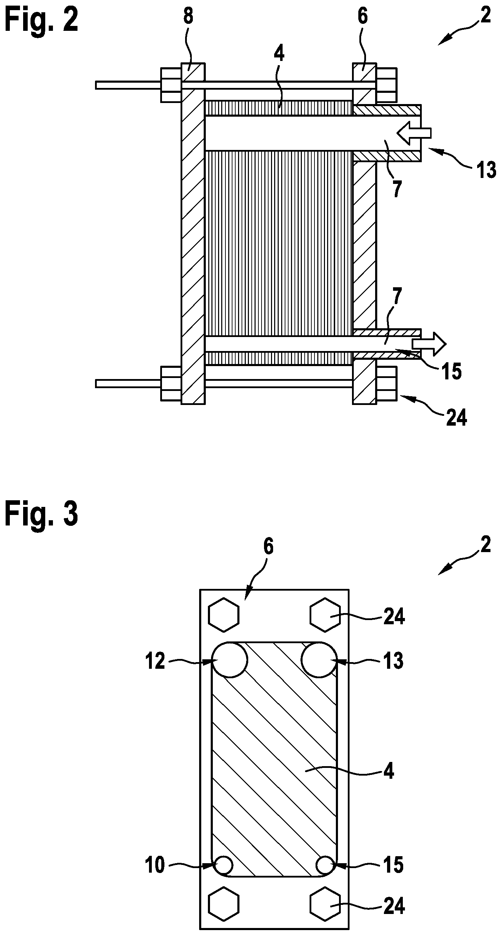

In den Figuren 2 bis 4 sind schematische Darstellungen des Wärmetauschers 2 gemäß einer ersten Ausführungsform gezeigt. Der Wärmetauscher 2 ist aus unterschiedlichen Perspektiven illustriert.

Die Basiseinheit 4 ist zwischen dem Anschlussabschnitt 6 und dem Konterabschnitt 8 beispielhaft durch Schraubverbindungen 24 befestigt und kann beliebig ausgetauscht werden.

Der Anschlussabschnitt 6 weist mehrere Anschlüsse 10, 12, 13, 15 auf, welche mit den Fluidkanälen 7 der Basiseinheit 2 fluidführend verbunden sind. Die Anschlüsse 10, 12, 13, 15 sind mechanisch kodiert, sodass ein manipulationssicherer Einbau in der Anlage 1 vorgesehen ist.

Die mechanische Kodierung der Anschlüsse 10, 12, 13, 15 kann beispielsweise über eine Form, eine Position, Verteilung der Anschlüsse, Querschnitt und/oder eine Querschnittsform der Anschlüsse 10, 12, 13, 15 erfolgen. Beispielsweise können die Anschlüsse 10, 12, 13, 15 eine rechteckige oder ovale Querschnittsform aufweisen.

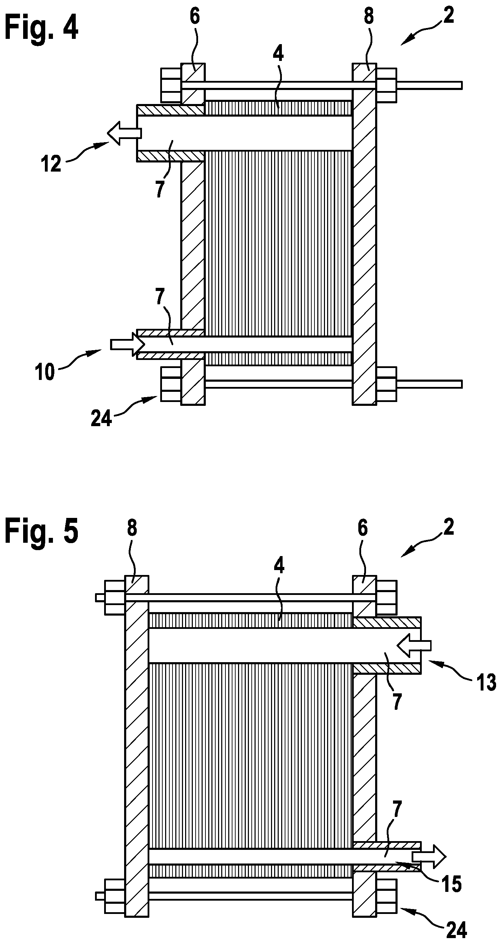

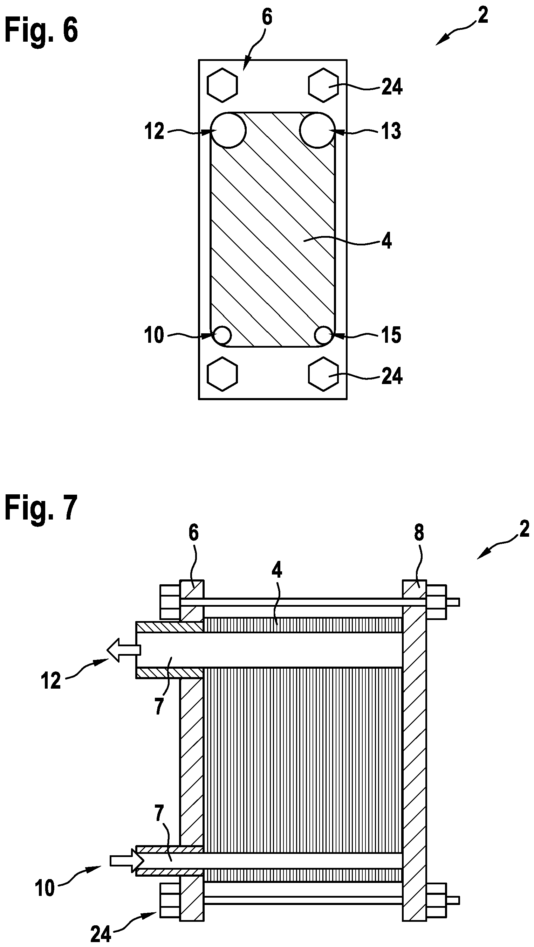

Die Figuren 5 bis 7 zeigen schematische Darstellungen eines Wärmetauschers 2 gemäß einer weiteren Ausführungsform. Im Unterschied zur ersten Ausführungsform, weist der Wärmetauschers 2 eine vergrößerte Basiseinheit 4 auf, welche eine höhere Anzahl von Blechen 5 umfasst. Hierdurch kann eine höhere Trinkwassermenge aufbereitet werden.

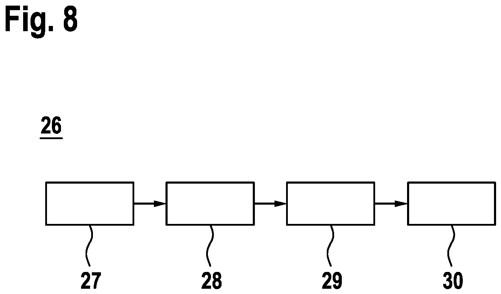

In der Figur 8 ist ein schematisches Ablaufdiagramm zum Veranschaulichen eines Verfahrens 26 zum Warten der in Figur 1 gezeigten Anlage 1 gemäß einer Ausführungsform dargestellt. In einem Schritt 27 wird der Betrieb der Anlage 1 kurzzeitig eingestellt.

Mindestens ein erster Wärmetauscher 2 wird aus der Anlage 1 ausgebaut 28. Der erste Wärmetauscher 2 kann beispielsweise ein durch Kalkablagerungen zugesetzter Wärmetauscher 2 sein.

In einem weiteren Schritt 29 wird der erste Wärmetauscher 2 durch mindestens einen zweiten Wärmetauscher 2 ersetzt. Der zweite Wärmetauscher 2 kann beispielsweise ein gereinigter oder ein neuer Wärmetauscher sein, welcher einen uneingeschränkten Betrieb der Anlage 1 ermöglicht.

Nach dem Einbau 29 des zweiten Wärmetauschers 2 wird der Betrieb der Anlage 1 fortgesetzt 30.

## Patentansprüche

1. Wärmetauscher (2), insbesondere für den Einsatz in einer Destillationsanlage, aufweisend einen Einbaurahmen (6, 8) und eine als ein Stapel aus mehreren Blechen (5) ausgestaltete Basiseinheit (4), wobei die Bleche (5) der Basiseinheit (4) zum Ausbilden von Fluidkanälen (7) eine Prägung aufweisen, wobei mindestens ein Fluidkanal (7) zum Führen eines Fluids zwischen mindestens zwei Blechen (5) ausgebildet ist, wobei die Basiseinheit (4) austauschbar zwischen einem Anschlussabschnitt (6) und einem Konterabschnitt (8) des Einbaurahmens (6, 8) angeordnet ist, **dadurch gekennzeichnet, dass** die Fluidkanäle (7) der Basiseinheit (4) und Anschlüsse (10, 11, 12, 13, 14, 15) der Anschlusseinheit (6) und/oder Verbindungen zwischen der Anschlusseinheit (6) und der Basiseinheit (4) mechanisch durch eine individuelle Formgebung und/oder elektronisch durch eine elektronische Sicherung in Form eines RFID-Transponders (23) oder in Form eines Sensors kodiert sind.

2. Wärmetauscher nach Anspruch 1, wobei die Anschlüsse (10, 11, 12, 13, 14, 15) der Anschlusseinheit (6) und/oder die Verbindungen zwischen der Anschlusseinheit (6) und der Basiseinheit (4) durch eine Form, eine Position, Verteilung der Anschlüsse (10, 11, 12, 13, 14, 15), Querschnitt und/oder eine Querschnittsform der Anschlüsse (10, 11, 12, 13, 14, 15) mechanisch kodiert sind.

3. Wärmetauscher nach Anspruch 1 oder 2, wobei die mit den Fluidkanälen (7) fluidleitend verbindbaren Anschlüsse (10, 11, 12, 13, 14, 15) der Anschlusseinheit (6) sich senkrecht von der Anschlusseinheit (6) erstrecken.

4. Wärmetauscher nach einem der Ansprüche 1 bis 3, wobei die Basiseinheit (4) als ein Stapel aus miteinander verschweißten, gesinterten, zusammengesteckten, gekrimpten, gedruckten, verlöteten oder verklebten Blechen (5) ausgestaltet ist, wobei die Basiseinheit (4) als ein Spritzgussteil oder als ein Rapid-Prototype-Element ausgebildet ist.

5. Wärmetauscher nach einem der Ansprüche 1 bis 4, wobei die Basiseinheit (4) aus einem Metall, einer Metalllegierung oder einem thermisch leitfähigen Kunststoff hergestellt ist.

6. Wärmetauscher nach einem der Ansprüche 1 bis 5, wobei eine Basiseinheit (4) mit unterschiedlich einstellbarer Anzahl von Blechen (5) in den Einbaurahmen (6, 8) einsetzbar ist.

7. Anlage (1) zur thermischen Behandlung von mindestens einem Fluid, wobei die Anlage (1) mindestens einen Wärmetauscher (2) nach einem der vorhergehenden Ansprüche aufweist, wobei der Wärmetauscher (2) durch mindestens einen Ersatz-Wärmetauscher austauschbar ist.

8. Anlage nach Anspruch 7, wobei der Wärmetauscher (2) manipulationssicher über eine Form, Anzahl, Position und/oder Größe von Anschlüssen (10, 11, 12, 13, 14, 15) in der Anlage (1) angeschlossen ist.

9. Anlage nach Anspruch 7 oder 8, wobei die Anlage (1) mindestens ein Sichtfenster (22), insbesondere zum Prüfen eines Originalzustands des Wärmetauschers (2) und/oder einer Basiseinheit (4) des Wärmetauschers (2), aufweist, wobei der Wärmetauscher (2) und/oder die Basiseinheit (4) des Wärmetauschers (2) hinter dem Sichtfenster (22) in der Anlage (1) montiert ist.

10. Verfahren (26) zum Warten einer Anlage (1) gemäß einem der Ansprüche 7 bis 9, wobei ein Betrieb der Anlage (1) eingestellt (27) wird, mindestens ein erster Wärmetauscher (2) aus der Anlage (1) ausgebaut (28) und durch mindestens einen zweiten Wärmetauscher ersetzt (29) wird und wobei der Betrieb der Anlage (1) fortgesetzt (30) wird.

## Claims

1. Heat exchanger (2), in particular for use in a distillation plant, comprising an installation frame (6, 8) and a base unit (4) in the form of a stack of a plurality of metal sheets (5), wherein, in order to form fluid ducts (7), the metal sheets (5) of the base unit (4) have an embossing, wherein at least one fluid duct (7) for conducting a fluid is formed between at least two metal sheets (5), wherein the base unit (4) is exchangeably arranged between a connecting portion (6) and a counter-portion (8) of the installation frame (6, 8), **characterized in that** the fluid ducts (7) of the base unit (4) and connections (10, 11, 12, 13, 14, 15) of the connection unit (6) and/or connections between the connection unit (6) and the base unit (4) are mechanically encoded by an individual shaping and/or are electronically encoded by an electronic safety device in the form of an RFID transponder (23) or in the form of a sensor.

2. Heat exchanger according to Claim 1, wherein the connections (10, 11, 12, 13, 14, 15) of the connection unit (6) and/or the connections between the connection unit (6) and the base unit (4) are mechanically encoded by a shape, position, distribution of the connections (10, 11, 12, 13, 14, 15), cross section and/or cross-sectional shape of the connections (10, 11, 12, 13, 14, 15).

3. Heat exchanger according to Claim 1 or 2, wherein the connections (10, 11, 12, 13, 14, 15) of the connection unit (6) that can be connected in a fluid-conducting manner to the fluid ducts (7) extend perpendicularly from the connection unit (6).

4. Heat exchanger according to one of Claims 1 to 3, wherein the base unit (4) is formed as a stack of welded-together, sintered, fitted-together, crimped, printed, soldered or adhesively bonded metal sheets (5), wherein the base unit (4) is formed as an injection-moulded part or as a rapid prototype element.

5. Heat exchanger according to one of Claims 1 to 4, wherein the base unit (4) is produced from a metal, a metal alloy or a thermally conductive plastic.

6. Heat exchanger according to one of Claims 1 to 5, wherein a base unit (4) with a variable number of metal sheets (5) can be fitted into the installation frame (6, 8).

7. Plant (1) for the thermal treatment of at least one fluid, wherein the plant (1) has at least one heat exchanger (2) according to one of the preceding claims, wherein the heat exchanger (2) can be exchanged for at least one replacement heat exchanger.

8. Plant according to Claim 7, wherein the heat exchanger (2) is connected in a tamperproof manner by way of a shape, number, position and/or size of connections (10, 11, 12, 13, 14, 15) in the plant (1).

9. Plant according to Claim 7 or 8, wherein the plant (1) has at least one viewing window (22), in particular for checking an original state of the heat exchanger (2) and/or a base unit (4) of the heat exchanger (2), wherein the heat exchanger (2) and/or the base unit (4) of the heat exchanger (2) is installed in the plant (1) behind the viewing window (22).

10. Method (26) for servicing a plant (1) according to one of Claims 7 to 9, wherein operation of the plant (1) is stopped (27), at least one first heat exchanger (2) is removed from the plant (1) (28) and is replaced by at least one second heat exchanger (29) and wherein the operation of the plant (1) is continued (30).

## Revendications

1. Echangeur de chaleur (2), en particulier pour une utilisation dans une installation de distillation, présentant un châssis intégré (6, 8) et une unité de base (4) configurée comme un empilement de plusieurs tôles (5), dans lequel les tôles (5) de l'unité de base (4) présentent un gaufrage pour réaliser des conduits de fluide (7), dans lequel au moins un conduit de fluide (7) est réalisé pour acheminer un fluide entre au moins deux tôles (5), dans lequel l'unité de base (4) est disposée de manière remplaçable entre une section de raccordement (6) et une contre-section (8) du châssis intégré (6, 8), **caractérisé en ce que** les conduits de fluide (7) de l'unité de base (4) et les raccords (10, 11, 12, 13, 14, 15) de l'unité de raccordement (6) et/ou les liaisons entre l'unité de raccordement (6) et l'unité de base (4) sont codés mécaniquement par une forme spécifique et/ou électroniquement par une sécurité électronique sous la forme d'un transpondeur RFID (23) ou sous la forme d'un capteur.

2. Echangeur de chaleur selon la revendication 1, dans lequel les raccords (10, 11, 12, 13, 14, 15) de l'unité de raccordement (6) et/ou les liaisons entre l'unité de raccordement (6) et l'unité de base (4) sont codés mécaniquement par une forme, une position, une répartition des raccords (10, 11, 12, 13, 14, 15), une section transversale et/ou une forme de section transversale des raccords (10, 11, 12, 13, 14, 15).

3. Echangeur de chaleur selon la revendication 1 ou 2, dans lequel les raccords (10, 11, 12, 13, 14, 15) pouvant être reliés en liaison fluidique aux conduits de fluide (7) de l'unité de raccordement (6) s'étendent verticalement à partir de l'unité de raccordement (6).

4. Echangeur de chaleur selon l'une quelconque des revendications 1 à 3, dans lequel l'unité de base (4) est réalisée sous la forme d'un empilement de tôles (5) soudées, frittées, assemblées, serties, imprimées, brasées ou collées ensemble, dans lequel l'unité de base (4) est réalisée sous la forme d'une pièce moulée par injection ou d'un élément de prototype rapide.

5. Echangeur de chaleur selon l'une quelconque des revendications 1 à 4, dans lequel l'unité de base (4) est fabriquée à partir d'un métal, d'un alliage de métal ou d'une matière plastique thermoconductrice.

6. Echangeur de chaleur selon l'une quelconque des revendications 1 à 5, dans lequel une unité de base (4) avec un nombre de tôles (5) réglable de façon variable peut être insérée dans le châssis intégré (6, 8).

7. Installation (1) pour le traitement thermique d'au moins un fluide, l'installation (1) présentant au moins un échangeur de chaleur (2) selon l'une quelconque des revendications précédentes, dans lequel l'échangeur de chaleur (2) peut être remplacé par au moins un échangeur de chaleur de rechange.

8. Installation selon la revendication 7, dans laquelle l'échangeur de chaleur (2) est raccordé dans l'installation (1) de manière inviolable par l'intermédiaire d'une forme, d'un nombre, d'une position et/ou d'une taille des raccords (10, 11, 12, 13, 14, 15) .

9. Installation selon la revendication 7 ou 8, l'installation (1) présentant au moins un hublot (22), en particulier pour vérifier un état d'origine de l'échangeur de chaleur (2) et/ou d'une unité de base (4) de l'échangeur de chaleur (2), dans laquelle l'échangeur de chaleur (2) et/ou l'unité de base (4) de l'échangeur de chaleur (2) sont montés derrière le hublot (22) dans l'installation (1).

10. Procédé (26) pour la maintenance d'une installation (1) selon l'une quelconque des revendications 7 à 9, dans lequel un fonctionnement de l'installation (1) est arrêté (27), au moins un premier échangeur de chaleur (2) est démonté (28) de l'installation (1) et est remplacé (29) par au moins un deuxième échangeur de chaleur, et dans lequel le fonctionnement de l'installation (1) est poursuivi (30).
